# EUROPÄISCHE PATENTSCHRIFT

(11) **EP 0 513 322 B1**
(45) Veröffentlichungstag und Bekanntmachung des Hinweises auf die Patenterteilung: **15.02.1995**
(21) Anmeldenummer: 92901453.8
(22) Anmeldetag: 11.12.1991
(51) Int. Cl.: B23Q 35/26, B23B 29/034, B23Q 5/04, B23B 41/04, B23Q 11/10

(54) **FORMBOHR- BZW. FORMDREHGERÄT**
FORM DRILLING OR TURNING DEVICE
OUTIL DE FORME POUR LE PERCAGE OU LE TOURNAGE

(30) Priorität: 11.12.1990 DE 4039489
(43) Veröffentlichungstag der Anmeldung: 19.11.1992
(73) Patentinhaber: Hörmansdörfer, Gerd, D-31303 Burgdorf (DE)
(72) Erfinder: Hörmansdörfer, Gerd, D-31303 Burgdorf (DE)
(74) Vertreter: Seewald, Jürgen, Dipl.-Ing.
(86) Internationale Anmeldenummer: DE9100963
(87) Internationale Veröffentlichungsnummer: WO9210330

(56) Entgegenhaltungen:
- DE-B- 1 028 067
- DE-C- 054 878
- DE-C- 618 133
- DE-C- 830 270
- DE-C- 832 372
- FR-A- 1 114 723
- US-A- 3 800 621
- W.H. Gres : "Die geometrischen Verhältnisse bei der Herstellung unregelmässiger Flächen", 1953, Springer-Verlag, Berlin, pages 41-47
- K. Luck, K.-H. Modler : "Getriebetechnik", 1990, Springer-Verlag, Wien, see pages 26-27-240 to 242.
- Werkstattstechnik, vol. 72, No. 7, July 1982, (Würzburg DE) P. Bauer. "Besonderheiten formschlüssiger Kurvengetriebe", pages 377-380.

## Beschreibung

Die Erfindung betrifft ein Formbohr- bzw. Formdrehgerät, bestehend aus einem Antriebsschaft, einem feststehenden Gehäuse und einem Werkzeugträger, der zur Aufnahme eines Werkzeugs mit mindestens einer Schneidkante ausgebildet ist, wobei Antriebsschaft und Werkzeugträger im Gehäuse drehbar gelagert sind und derart in Verbindung stehen, daß während des Betriebs eine rotative Kraftkomponente vom Antriebsschaft auf den Werkzeugträger übertragen wird, der Werkzeugträger aber gleichzeitig in der Radialebene auslenkbar ist, wobei diese Auslenkung mittels dem Gehäuse und dem Werkzeugträger zugeordneter Steuerelemente zur Konturerzeugung steuerbar ist. Die Steuerelemente bestehen aus mindestens zwei mit dem Gehäuse fest verbundenen, übereinander und in Drehrichtung um einen bestimmten Winkelbetrag gegeneinander verdreht angeordneten Kurvenscheiben. Mit diesem Gerät können Formbohrungen oder Außenkonturen spezieller Form, z.B. Vierkant-, Sechskant-, Oval-, Ellipsen- oder Polygonform spanend hergestellt werden.

Ein Formbohrgerät der vorstehend genannten Art zum Bohren von Vier- und Mehrkantlöchern ist aus der DE-C-618 133 bekannt.

Derartige Formen in Bohrungen oder an Zapfen werden in der Technik für die verschiedensten Anwendungen und in den unterschiedlichsten Geometrien benötigt. Allgemein bekannt und verbreitet sind z.B. Innensechskante in den Köpfen von Schrauben. Für die Massenherstellung solcher Schrauben kommen lediglich Umformverfahren, wie z.B. das Kalt- oder Warmfließpressen in Frage, weil solche Verfahren gut brauchbare Oberflächen bei niedrigsten Stückkosten erzielen. Anders sieht es aus, wenn kleinere Stückzahlen benötigt werden, oder wenn das jeweilige Bauteil ein derartiges Umformverfahren nicht zuläßt. Vor allem im allgemeinen Maschinenbau besteht Bedarf an den unterschiedlichsten Formbohrungen bzw. Außenkonturen an spanend herzustellenden Bauteilen. Hier wird in Bezug auf Formbohrungen gewöhnlich auf das Räumen oder Stoßen zurückgegriffen, in manchem Fall auch auf das Erodieren, oder das Formbohren mittels Schablone, während für die Herstellung von Außenkonturen gewöhnlich eine frästechnische Herstellung in Frage kommt.

Beim Räumen oder Stoßen von Formbohrungen, auch beim Pendelräumen, ist im allgemeinen von einer mehr oder weniger stark gerieften Oberfläche der Formbohrung auszugehem. Die Maßhaltigkeit einer derart hergestellten Bohrung ist mäßig. Bei höherfesten Werkstoffen tritt ein erhöhter Verschleiß der Räumnadel auf. Zusätzlich besteht bei Sackbohrungen der Nachteil des Auftretens von eingerollten Drückspänen.

Das Erodieren von Formbohrungen führt zu hervorragenden Ergebnissen, sogar in gehärteten Werkstoffen. Jedoch ist der Zeitaufwand für diese Herstellung sehr hoch, so daß dieses Verfahren für die meisten Fälle aus Kostengründen ausscheidet.

Andererseits ist ein Apparat zur rotativ spanenden Herstellung von Formbohrungen bekannt, der im wesentlichen aus einem speziellen Bohrer besteht, welcher mittels eines Pendelhalters in eine Maschinenspindel einspannbar ist und welcher während des Bohrvorgangs mittels einer über dem Werkstück anzuordnenden gehärteten Schablone mit der jeweils gewünschten Kontur geführt wird. Die Funktion des genannten Gerätes ist jedoch derart mangelhaft, daß seine Anwendung sehr begrenzt sein dürfte. Ein wesentlicher Nachteil des Apparats ist die Tatsache, daß bereits aus geometrischen Gründen der mehrkantige Bohrer keine eindeutige Bahn innerhalb der Schablone beschreibt, so daß die hergestellte Kontur in wechselhafter Weise von der Kontur der Schablone abweicht. Durch das schlagende Rotieren der äußeren Bohrerkanten innerhalb der Schablone werden die Kanten mit der Zeit derart verrundet, daß bei einem stirnseitigen Nachschliff des Bohrers die Innenmaße der herzustellenden Bohrung kleiner werden und der Bohrer noch mehr in der Schablone herumschlägt. Der aus HSS hergestellte Bohrer ist nicht nur in der Anschaffung teuer und schwer nachzuschleifen, sondern besitzt auch eine ausgesprochen ungünstige Schneidkantengeometrie. Eine Montage von auswechselbaren Schneidplatten ist nicht möglich. Nachteilig ist ferner, daß vor Bohrbeginn die Schablone oberhalb des Werkstücks montiert, und der Bohrer zuerst bei stehender Spindel in die Schablone eingeführt werden muß, so daß sich daraus eine ausgesprochen umständliche Arbeitsweise ergibt, welche z.B. auf einer automatisch arbeitenden Maschine nicht durchführbar ist.

In Bezug auf die spanende Herstellung von Außenkonturen bestehen heute eine Reihe von technischen Möglichkeiten, von denen das Fräsen wohl die naheliegendste sein dürfte. Allerdings ist beim Fräsen bekanntlich von einer geringeren Zerspanungsleistung pro Zeiteinheit im Vergleich zum Drehen auszugehen. Auch hier sind Spezialgeräte, z.B. sogenannte Mehrkantfräsgeräte, bekannt, welche auf Fräsmaschinen recht gute Ergebnisse zeigen. Derartige Mehrkantfräsgeräte lassen jedoch nicht die Herstellung gerundeter Konturen wie z.B. Ellipsen oder Gleichdicke zu, und sind z.B. auch nicht auf einer CNC-Drehmaschine mit angetriebenen Werkzeugen verwendbar.

Aus der DE-PS 819 610 ist eine Vorrichtung zur Erzeugung vieleckiger Löcher bekannt. Diese Vorrichtung besitzt ein zylindrisches Gehäuse, das durch Mittel, z.B. einen an ihm befestigten Arm, am Drehen um seine senkrechte Mittelachse gehindert wird. In diesem Gehäuse ist ein, beispielsweise in das Bohrfutter einer Bohrnaschine einsteckbarer Morsekegel drehbar gelagert. Der Morsekegel nimmt einen Scheibenkörper mit, der einen Radialschlitz zur Aufnahme einer Werkzeughaltestange aufweist, in dem die Haltestange neben ihrer durch den Morsekegel vermittelten Drehbewegung radial verschiebbar ist. Im Scheibenkörper ist eine in ihrer Spannung einstellbare Feder angeordnet, die die Werkzeughaltestange radial nach außen drückt, so daß diese mit einer in diesem Bereich schneidenförmigen Kante an eine im unteren Teil des Gehäuses angeordnete Führungsschablone anliegt, die in ihrer Kontur der herzustellenden vieleckigen Bohrung entspricht. Dreht sich nun der Morsekegel, so dreht sich die Werkzeughaltestange mit und wird durch die Feder gegen den Rand der Führungsschablone gepreßt. Sie gleitet dabei entsprechend der Drehung des Scheibenkörpers im Radialschlitz hin und her. Ein in der Werkzeughaltestange eingespanntes Werkzeug soll auf diese Weise ein vorgebohrtes Loch zu einem der Kontur der Führungsschablone entsprechenden vieleckigen Loch aufbohren.

Der wesentliche Nachteil dieser Vorrichtung ist der, daß der angestrebte Erfolg, wenn überhaupt, nur sehr mangelhaft eintreten wird. Die Ursachen dafür sind in den zwischen der schneidenförmigen Kante der Werkzeughaltestange und der Führungsschablone auftretenden Reibungskräfte und den zwischen diesen während eines Umlaufs zu verzeichnenden großen Winkeländerungen zu sehen. Ein einwandfreies Umlaufen des Werkzeugs ist nur bei entsprechend geringen Reibungskräften zwischen Werkzeughaltestange und Führungsschablone möglich, d.h., die Feder muß entsprechend schwach sein bzw. schwach eingestellt sein. Das führt aber automatisch zu einem schlagenden Umlauf, das "Schwingsystem" der Vorrichtung schaukelt sich dabei auf, und es kommt zum Federflattern. Eine vernünftige Bearbeitung ist so nicht möglich. Eine einwandfreie, der gewünschten Kontur entsprechende Bohrung, ist nur herstellbar, wenn die schneidenförmige Kante der Werkzeughaltestange in allen Phasen des Umlaufs fest an den Rändern der Führungsschablone anliegt. Das ist aber nur bei entsprechend starker, bzw. stark eingestellter Feder möglich. Daraus resultieren aber sehr hohe Reibungskräfte, die in Verbindung mit den insbesondere in den Eckbereichen der Schablone zu verzeichnenden großen Winkeländerungen und Beschleunigungswerten zu einem Festfressen der Werkzeughaltestange und einer daraus eventuell resultierenden Zerstörung von Teilen der Vorrichtung führen würden.

Die obenstehenden Ausführungen gelten sinngemäß auch für prinzipiell ähnliche Vorrichtungen, die vornehmlich in der ersten Hälfte unseres Jahrhunderts ersonnen wurden, aber, wenn überhaupt realisiert, nicht den erwünschten Erfolg brachten. Aus diesem Grunde wird heute beim Formbohren immer noch, trotz der aufgezeigten Mängel, auf das Schablonenbohrverfahren zurückgegriffen.

Es bestand daher die Aufgabe zur Schaffung eines speziellen Gerätes für die Herstellung unterschiedlicher Formbohrungen bzw. unterschiedlicher Außenkonturen für die Bedarfsfälle kleiner und mittlerer Stückzahlen bei erhöhten Anforderungen an die Sauberkeit der Oberfläche und die Maßhaltigkeit der Kontur, ohne die oben beschriebenen Nachteile, wobei eine derartige Vorrichtung außerordentlich wirtschaftlich arbeiten sollte.

Diese Aufgabe wird mittels eines Formbohr- bzw. Formdrehgerätes gelöst, das einen Antriebsschaft, ein feststehendes Gehäuse und einen Werkzeugträger, der zur Aufnahme eines Werkzeugs mit mindestens einer Schneidkante ausgebildet ist, aufweist, wobei Antriebsschaft und Werkzeugträger im Gehäuse drehbar gelagert sind und derart miteinander in Verbindung stehen, daß während des Betriebes eine rotative Kraftkomponente vom Antriebsschaft auf den Werkzeugträger übertragen wird, der Werkzeugträger aber gleichzeitig in der Radialebene auslenkbar ist, wobei diese Auslenkung mittels dem Gehäuse und dem Werkzeugträger zugeordneter Steuerelemente zur Konturerzeugung steuerbar ist. Die Steuerelemente bestehen aus mindestens zwei mit dem Gehäuse fest verbundenen, übereinander und in Drehrichtung um einen bestimmten Winkelbetrag gegeneinander verdreht angeordneten Kurvenscheiben. Erfindungsgemäß bestehen die Steuerelements ferner aus auf diesen Kurvenscheiben abrollenden, dem Werkzeugträger zugeordneten Rollkörpern, wobei zwischen den Rollkörpern und den Kurvenscheiben mindestens drei Berührungspunkte bestehen, und die Kurvenzüge der Kurvenscheiben eine dem halben Durchmesser der Rollkörper entsprechende Äquidistante der in radialer Richtung um eine konstante Strecke ins Große verzerrten Kontur der Formbohrung- bzw. Außenkontur beschreiben.

Die Erfindung greift also zur Steuerung des Werkzeugträgers auf rein rollend wirkende Elemente zurück, wodurch die Reibungskräfte zwischen diesen Elementen und den Kurvenscheiben praktisch vernachlässigbar klein sind. Das erfindungsgemäße Zusammenwirken von Rollelementen und Kurvenscheiben stellt eine Zwangssteuerung dar, durch die dem im Gehäuse rotierenden Werkzeugträger eine Radial- oder Schwenkbewegung überlagert wird.

Ein wesentlicher Punkt der Erfindung ist die Erkenntnis, daß sich in einer Radialebene liegende und der Drehbewegung eines Körpers überlagerte radiale Auslenkungen mittels rein rollend wirkender Elemente besonders günstig dadurch desmodromisch (zwangsweise) erzeugen lassen, indem die Steuerelemente, z.B. bestehend aus einer jeweils äußeren Kurvenscheibe und innenlaufenden Rollkörpern, in axialer Richtung mindestens zweifach übereinandergestapelt und gleichzeitig um einen bestimmten Winkelbetrag gegeneinander verdreht angeordnet werden. Ein weiterer Schwerpunkt der Erfindung ist ferner die Erkenntnis, daß die an derartigen Kurvenscheiben erforderlichen Kurvenzüge mit zunehmender Verzerrung ins Große sich weg von der zu bohrenden bzw. drehenden Kontur immer mehr hin zu einer Kreisform ändern.

Diese Erkenntnisse werden mit der Erfindung in der Weise benutzt, daß für die Steuereinheit des Gerätes die Verwendung mindestens zweier Kurvenscheiben vorgeschlagen wird, welche in axialer Richtung versetzt und in Drehrichtung um einen bestimmten Betrag gegeneinander verdreht angeordnet sind. Die Wirkrichtung der zum Werkzeugträger gehörigen Rollkörper, welche synchron zu den Kurvenscheiben axial gegeneinander versetzt sind, ist auf die Kurvenzüge der Kurvenscheiben abgestimmt. Ferner wird mittels der Kurvenzüge der Kurvenscheiben eine dem halben Durchmesser der Rollkörper entsprechende Äquidistante der ins Große verzerrten Kontur der Formbohrung bzw. der Außenkontur beschrieben. Die Erfindung schafft hier ferner die Wahlmöglichkeit zwischen einer rein radial schwingend bzw. einer exzentrisch schwingend oder exzentrisch rotierend der Drehbewegung des Werkzeugträgers überlagerten Bewegung, wobei diese konstruktive Bandbreite von einer relativ gleichbleibenden Schnittgeschwindigkeit der Schneide bei stark schwankenden Schnittwinkeln der Nebenschneide bis zu stark schwankenden Schnittgeschwindigkeiten der Schneide bei sich gering ändernden Schnittwinkeln der Nebenschneide reicht. Dabei wird vorzugsweise mit dem Kurvenzug einer Kurvenscheibe eine der Schneide des Werkzeugs zugeordnete Hauptkurve beschrieben, während die beiden anderen Kurvenscheiben die festzulegenden Komplementärkurven besitzen. Bei der Festlegung der Komplementärkurven ist darauf zu achten, daß die Kurvenzüge keine kleineren Innenradien als die Radien der Rollkörper, bzw. keine Hinterschneidungen oder sogenannte Schlaufen besitzen. Die Gestaltung der Kurvenzüge wirkt sich ferner auf die Laufruhe bzw. den Verschleiß des Gerätes aus. So wird es günstig sein, statt scharfkantiger Ecken leichte Eckenverrundungen vorzusehen, bzw. den Ein- und Auslauf an der Ecke eines Konturelementes selbst bei Benutzung einer Eckenverrundung weich übergehend (z.B. ähnlich einer parabolischen Kurve) zu gestalten.

Bezüglich der konstruktiven Auslegung des erfindungsgemäßen Gerätes bestehen bestimmte Freiheiten was die Zahl der Kurvenscheiben und die Zahl der innerhalb einer Kurvenscheibe umlaufenden Rollkörper anbetrifft. So kann z.B. ein Kurvenscheibensatz auch aus vier Kurvenscheiben bestehen, mit der Wahlmöglichkeit eines gleichen winkelmäßigen Versatzes der jeweiligen Kurvenzüge, bzw. mit der Wiederholung eines Kurvenzuges (z.B. erste und vierte Kurvenscheibe mit gleichem Kurvenzug und gleicher winkelmäßiger Position). Wesentlich ist, daß zwischen den vorhandenen Rollkörpern und Kurvenscheiben mindestens drei Berührungspunkte, bzw. geht man von einer Linienberührung aus, Berührungslinien vorliegen. So kann beispielsweise mit zwei Kurvenscheiben gearbeitet werden, wobei dann in einer Kurvenscheibe zwei und in der anderen Kurvenscheibe ein Rollkörper umläuft. Vorzugsweise werden aber drei Kurvenscheiben mit mindestens je einen umlaufendem Rollkörper eingesetzt.

Der Antriebsschaft dient der Einleitung des zum Bohren und Drehen benötigten Drehmoments und ist im Gehäuse mittels Wälzlagern drehbar gelagert. Er ist maschinenseitig so gestaltbar, daß die Aufnahme des Gerätes mittels aller genormter oder angebotener Systeme möglich ist, z.B. einem Zylinderschaft, einem Morsekegel, einem Steilkegel oder einer Stirnverzahnung, so daß der Formbohrer universell auf allen Tisch-, Säulenbohrmaschinen, Fräsmaschinen, Bearbeitungszentren oder Drehmaschinen mit angetriebenen Werkzeugen einsetzbar ist.

Das während des Betriebs feststehende Gehäuse ist z.B. entweder so ausgelegt, daß es auf der Revolverscheibe einer Drehmaschine mit angetriebenen Werkzeugen befestigbar ist, wobei gleichzeitig der Anschluß für das Kühlschmiermittel in Eingriff kommt, oder das mittels eines separat angebrachten oder integrierten Anschlages das Mitdrehen des Gehäuses verhindert wird, wenn der Formbohrer direkt an eine rotierende Spindel angeschlossen wird. Zum Gehäuse gehört die Steuereinheit, welche aus fest mit dem Gehäuse verbundenen und vorzugsweise austauschbaren Kurvenscheiben besteht.

Im Gehäuse ist ein Werkzeugträger gelagert, welcher über eine spezielle Kupplung (z.B. Oldham-Kupplung, Schmidt-Kupplung, Kardangelenk, Helicoflex-Kupplung, Metallspirale, Wellbalg oder dergleichen) mit dem Antriebsschaft so verbunden ist, daß eine rotative Kraftkomponente vom Antriebsschaft auf den Werkzeugträger übertragen wird, auch wenn sich der Werkzeugträger in einer radial ausgelenkten Position befindet. Dem Werkzeugträger sind auf den Kurvenscheiben abrollende Elemente (z.B. Kugellager, Nadellager, Rollhülsen, Rollkörper) zugeordnet. Der Werkzeugträger besitzt an seinem unteren Ende entweder eine Direktaufnahme für eine auswechselbare Schneidplatte bzw. einen Fräsbohrer, oder eine Aufnahme für einen Werkzeugschaft. Im Falle eines eingesetzten Werkzeugschaftes ist auf diesen eine auswechselbare Schneidplatte, vorzugsweise aus Vollhartmetall, montierbar. Besonders vorteilhaft ist im Falle einer Auslegung des Gerätes für die Herstellung von Formbohrungen die Befestigung der Schneidplatte mittels einer axial in den Werkzeugschaft eindrehbaren Zentralschraube und einer an beiden Teilen befindlichen axialen Verzahnung.

Nach der Erfindung ist ferner vorgesehen, den Werkzeugträger mit einem Strömungsweg für ein flüssiges Kühlschmiermittel zu versehen, wobei dieser Strömungsweg abdichtbar mit dem maschinenseitigen Zulauf verbindbar ist, z.B. mittels eines mitrotierenden gummielastischen Schlauchs zwischen Werkzeugträger und Antriebsschaft.

Soll z.B. mittels des erfindungsgemäßen Gerätes eine sechseckige Kontur hergestellt werden, so ergibt sich, daß sich eine derartige Kontur in sechs gleiche Elemente aufteilen läßt. Mit anderen Worten: nach jeweils 60° Drehwinkel wird ein gleichartiges Konturelement wiederholt. Wird für die Kontur eine größere Eckenverrundung zugelassen, so läßt sich die erforderliche Steuereinheit des Formbohrers unter Verwendung mehrerer Kurvenscheiben gleicher Kontur realisieren. Werden in diesem Fall z.B. drei axial übereinandergestapelte Kurvenscheiben verwendet, ist es sinnvoll, diese um den Winkelbetrag 60°:3 = 20° gegeneinander in Drehrichtung versetzt anzuordnen, während die jeweilige Wirkrichtung der zum Werkzeugträger gehörenden Rollkörper in dem gewählten Beispiel in den entsprechend axial versetzten Ebenen um jeweils 360°:3 = 120° gegeneinander und korrespondierend zur Verdrehrichtung der Kurvenscheiben geschwenkt ist.

Ist eine solche Kontur beispielsweise als Seckskantbohrung für einen Schlüssel von 10 mm vorgesehen und nimmt man als Schlüsselweite der Formbohrung ein Maß von 10,2 mm an, so ergibt sich bei einer scharfen Ausspitzung der Ecken ein Eckmaß von ungefähr 11,78 mm. Aus den entsprechenden Halbmessern von 5,1 bzw. 5,89 mm ergibt sich, daß die Schneide des Formbohrers während ihres Umlaufs jeweils sechs Mal um 0,79 mm nach außen und wieder zurück bewegt werden muß. Würde der Mittelpunkt eines Rollkörpers des Werkzeugträgers mit der Schneide des Fräsbohrers übereinfallen, so ergäbe sich daraus für die korrespondierende Kurvenscheibe eine Kontur, welche im wesentlichen einer um den Halbmesser des Rollkörpers nach außen äquidistant zum Sechseck versetzten Linie entspräche. Im genannten Beispiel wäre dann bei einem Rollkörperhalbmesser von z.B. 4 mm die Schlüsselweite der Steuerkurve 18,2 mm und das Eckmaß 19,78 mm. Eine solche Auslegung hat den Nachteil, daß für den (innenliegenden) Werkzeugträger und die Rollkörper nur wenig Platz zur Verfügung steht. Andererseits wäre es ungünstig, die Anordnung umzudrehen (Kurvenscheiben innen, Werkzeugträger und Rollkörper außen), weil dann die bewegten Massen groß werden. Die erfindungsgemäße Verzerrung der Steuerkurve ins Große hat hier den Vorteil, daß die zu überlagernden Radialbewegungen absolut gleich bleiben und relativ zum Umlaufdurchmesser abnehmen, so daß der Werkzeugträger relativ weich umläuft. Die Anwendung dieses Tricks schafft gleichzeitig den für den Werkzeugträger erforderlichen Raum und erlaubt den Einbau größerer Rollkörper.

In der Praxis wird es günstig sein, für den mit Formbohrungen bzw. Außenkonturen abzudeckenden Durchmesserbereich mehrere Gehäusegrößen anzubieten, z.B. Größe 1 von 4 bis 12 mm, Größe 2 von 10 bis 25 mm, Größe 3 von 20 bis 50 mm. Bei den größeren Konturen ist nach der Erfindung vorgesehen, die Schneidplatte bzw. den Formfräser in vorteilhafter Weise neben der Schlichtschneide mit mindestens einer gegenüber der Schlichtschneide im Durchmesser zurückgesetzten und winkelmäßig verdreht angeordneten Schruppschneide auszurüsten, um das zu zerspanende Volumen aufzuteilen und gleichzeitig kleinere Späne zu erzeugen.

Vorteilhaft ist ferner die modulare Bauweise des erfindungsgemäßen Formbohrers, wobei die Steuereinheit, bzw. die Kurvenscheiben in einfacher Weise austauschbar sind, um mit dem Grundgerät sowohl unterschiedliche Konturen als auch unterschiedliche Größen bearbeiten zu können.

Bei der praktischen Anwendung des erfindungsgemäßen Gerätes als Formbohrer wird zunächst eine Vorbohrung (Kernloch) konventionell hergestellt, deren Durchmesser auf den kleinsten Durchmesser der Formbohrung abgestimmt ist. Die Bohrtiefe der Vorbohrung muß mindestens der Tiefe der Formbohrung entsprechen. Die Formbohrung mittels des erfindungsgemäßen Gerätes wird im Anschluß mit der dem Durchmesser angepaßten Drehzahl und einem dem Werkstoff entsprechenden Vorschub in einem Zug erstellt. Dabei ist die Zuführung von Kühlschmiermitteln, vorzugsweise über innere Kanäle, von großer Wichtigkeit, um vor allem ein Freispülen der Bohrung von Spänen zu bewirken.

Bei der Ausführung des erfindungsgemäßen Gerätes als Formdrehgerät ist der dem Werkzeugträger zugeordnete Schaft für die Schneidplatte außermittig angebracht. Eine radiale Verstellmöglichkeit des Schaftes ist vorhanden. Die Schneide der Schneidplatte zeigt dann nach innen, um die gewünschte Außenkontur zu drehen. Es sind in diesem Fall, ebenso wie beim Formbohren, lediglich am Ende eines Werkstückes liegende Konturen herstellbar.

Für die Herstellung von Konturen mit radial stark schwankenden Abmessungen, wie z.B. bei sehr großen Vierkanten, wird vorgeschlagen, zuerst mittels des erfindungsgemäßen Gerätes eine Schruppoperation mit reduziertem Zerspanungsvolumen durchzuführen, wobei ein entsprechend abgeänderter Kurvenscheibensatz verwendet werden muß. Danach sollte sich die Schlichtoperation mit der Fertigkontur anschließen.

In ähnlicher Weise kann eine derartige Bearbeitungsaufgabe mit einem einzigen Gerät dadurch gelöst werden, indem z.B. ein zu erstellender 20 mm-Innenvierkant mit einem Kurvenscheibensatz für einen 18 mm-Innenvierkant zuerst in zentraler Position zerspant wird. Im Anschluß kann dann die Fertigkontur durch mehrfaches radial versetztes Abfahren erstellt werden, im Falle der Herstellung auf einer CNC-Drehmaschine unter Verwendung der C-Achse.

Zusammen mit den vorgeschlagenen Detaillösungen wird mit dem erfindungsgemäßen Gerät ein Werkzeug zur Verfügung gestellt, welches eine Reihe herausragender Vorteile aufweist:
- exakte Konturgeometrie
- sehr enge Herstelltoleranzen
- sauberer Bohrungsgrund bei Sackbohrungen
- kaum Verschleiß der Mechanik
- auswechselbare Hartmetallplatte
- hohe Schnittgeschwindigkeit
- interne Kühlmittelzuführung
- Automatikbetrieb auf allen Maschinenarten
- Vielzahl von Bohrungsgeometrien

Die Erfindung wird nachstehend anhand eines Ausführungsbeispiels näher erläutert. In der dazugehörigen Zeichnung zeigt:
- Fig. 1: ein erfindungsgemäßes Formbohrgerät für die Herstellung kleinerer Formbohrungen in einer leicht vereinfachten, teilweise geschnittenen und ungefähr maßstabsgerechten Darstellung, und
- Fig. 2, 3 und 4: je eine Scheibe eines Kurvenscheibensatzes für das in Figur 1 dargestellte Formbohrgerät.

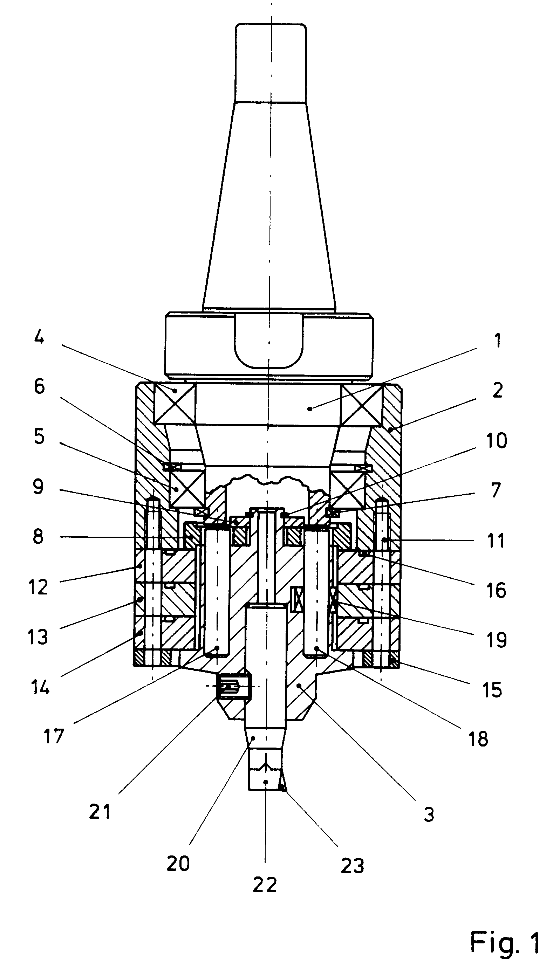

Der Antriebsschaft 1 des in Fig. 1 gezeigten Gerätes ist maschinenseitig als Steilkegel SK 30 ausgeführt. Er ist mittels der Wälzlager 4,5 im Gehäuse 2 gelagert. Das untere Lager 5 ist mit den Sicherungsringen 6,7 gesichert. Abtriebsseitig ist der Antriebsschaft 1 mit Zapfen versehen, welche in Langlochschlitze der Kupplungsscheibe 8 eingreifen, jedoch in der Darstellung wegen ihrer um 90° in der Radialebene gedrehten Position nicht sichtbar sind. Die Kupplungsscheibe 8 ist auf dem Werkzeugträger 3 mit einer Anlaufscheibe 9 befestigt und mit einem Sicherungsring 10 gesichert. Dem Gehäuse 2 sind drei Kurvenscheiben 12,13,14 zugeordnet, welche mittels nicht eingezeichneter Schrauben in den Sackgewinden 11 am Gehäuse 2 befestigt und gegeneinander und gegenüber dem Gehäuse 2 unter Zuhilfenahme nicht eingezeichneter Paßstifte gegen Verdrehung gesichert sind. Mit den Schrauben wird gleichzeitig ein Radialanschlag 15 am Gehäuse 2 befestigt, dessen Aufgabe die Verhinderung des Mitdrehens des Gehäuses 2 ist. In die Kurvenscheiben 12,13,14 sind Nuten 16 für O-Ringe eingestochen, welche der Abdichtung gegen Austritt von Öl bzw. Fett dienen. Die innere Kontur der Kurvenscheiben wurde der Einfachheit halber übereinstimmend glatt durchgezeichnet, das heißt, der jeweilige sich aus der Kontur und dem Verdrehwinkel ergebene Versatz wurde nicht berücksichtigt. Der Werkzeugträger 3 greift mit zwei einander mit 180° gegenüber liegenden Paßstifte 17, 18 in die Langlochschlitze der Kupplungsscheibe 8 ein. Einer der Paßstifte 18 dient gleichzeitig als Lagerzapfen für den Rollkörper 19, welcher mit der mittleren Kurvenscheibe 13 korrespondiert. Zwei weitere Paßstifte mit Rollkörpern, welche gegenüber dem Paßstift 18 in der Radialebene des Werkzeugträgers jeweils um 120° verdreht angeordnet sind und deren Rollkörper mit den Kurvenscheiben 12 und 14 korrespondieren sind in der Zeichnung nicht dargestellt bzw. verdeckt. Der Werkzeugträger ist mit einem Kragen an der Stirnfläche der untersten Kurvenscheibe 14 gelagert, um so die beim Bohren auftretenden Axialkräfte abzuleiten. An gleicher Stelle ist z.B. ein Gleitring oder ein Kugelkranz integrierbar, um die auftretende Reibung zu minimieren. Die Aufnahme der axialen Kräften ist bei entsprechender Ausführung (Breite) der Rollkörper 19 und der Kurvenscheiben 12, 13, 14 auch durch Einlegen von dünnen Blechen zwischen den Kurvenscheiben möglich, die geringfügig über den inneren Umfang der Kurvenscheiben herausragen. In diesem Fall laufen dann die Rollkörper 19, z.B. Kugellager, auf ihrem äußersten Randbereich auf diesen Blechen. Die Abstützung am Kragen des Werkzeugträgers kann dann entfallen. In den Werkzeugträger ist ein Werkzeugschaft 20 eingesetzt und mit einer Madenschraube 21 festgezogen. Auf den Werkzeugschaft 20 ist eine auswechselbare Schneidplatte 22 aus Hartmetall aufgeschraubt. Die Schneidplatte 22 ist mit einer Schneide 23 ausgestattet, welche in ihrer winkelmäßigen Lage am Werkzeugträger mit dem Rollkörper 19 und der Kurvenscheibe 13 korrespondiert. Der Werkzeugträger ist zentral durchbohrt, um einen Kanal für das Kühlschmiermittel zu eröffnen. Die Verlängerung der Bohrung innerhalb des Werkzeugschaftes und der Austritt in der Nähe der Schneidplatte wurde ebenso wie der intern nach oben weiterführende Anschluß aus Vereinfachungsgründen weggelassen.

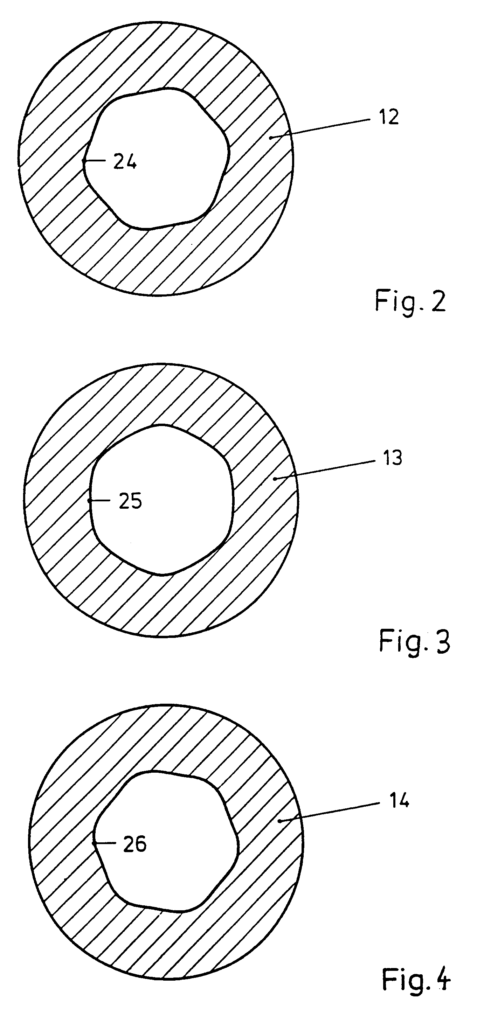

In den Fig. 2, 3 und 4 sind die drei einzelnen Kurvenscheiben 12, 13, 14 des zum in Fig. 1 gezeigten Ausführungsbeispiels gehörenden Kurvenscheibensatzes im gleichen Maßstab in Radialebene geschnitten dargestellt. Aus Gründen der zeichnerischen Vereinfachung wurden die Paßbohrungen für die Paßstifte sowie die Durchgangsbohrungen für die Befestigungsschrauben weggelassen. Der gezeigte Kurvenscheibensatz ist für die Herstellung eines Innensechskants der Schlüsselweite 11 mm vorgesehen. Die einzelnen Kurvenscheiben sind in ihrem Zentrum offen, wobei die Wendungen dieser Öffnungen in Gestalt eines jeweiligen Kurvenzuges 24,25,26 gebildet sind. Die mittlere Kurvenscheibe 13, welche in dem Ausführungsbeispiel mit demjenigen Rollkörper korrespondiert, welcher der Schneide 23 der Schneidplatte 22 zugeordnet ist, besitzt die Hauptkurve 25. Die obere bzw. untere Kurvenscheibe sind mit den Komplementärkurven 24,26 versehen. Es ist deutlich zu erkennen, daß bei der gewählten Auslegung durch die ins Große verzerrte Kontur und die Bildung der Äquidistanten die so gebildete Hauptkurve schon recht stark an einen Kreis angenähert ist. Trotzdem ist die sechseckige Grundform noch angedeutet. Es ist euch gut zu sehen, daß die beiden Komplementärkurven 24,26 von der Hauptkurve 25 abweichende Kurvenzüge besitzen. Obwohl allen Kurvenzügen eine weiche und gerundete Charakteristik gemein ist, wird beim Umlauf der Werkzeugschneide 23 tatsächlich eine perfekte und scharfkantige Kontur beschrieben.

## Patentansprüche

1. Formbohr- bzw. Formdrehgerät, bestehend aus einem Antriebsschaft dadurch gekennzeichnet, daß die Steuerelemente ferner aus, einem feststehenden Gehäuse in radialer Richtung um eine konstante Strecke und einem Werkzeugträger eine der Schneide des Werkzeugs zugeordneten, der zur Aufnahme eines Werkzeugs mit mindestens einer Schneidkante ausgebildet ist, wobei Antriebsschaft und Werkzeugträger im Gehäuse drehbar gelagert sind und derart miteinander in Verbindung stehen, daß während des Betriebs eine rotative Kraftkomponente vom Antriebsschaft auf den Werkzeugträger übertragen wird, der Werkzeugträger aber gleichzeitig in Radialebene auslenkbar ist, wobei diese Auslenkung mittels dem Gehäuse und dem Werkzeugträger zugeordneter Steuerelemente zur Konturenerzeugung steuerbar ist und die Steuerelemente aus mindestens zwei, mit dem Gehäuse (2) fest verbundenen, übereinander und in Drehrichtung um einen bestimmten Winkelbetrag gegeneinander verdreht angeordneten Kurvenscheiben (12,13,14) bestehen, dadurch gekennzeichnet, daß die Steuerelemente ferner aus auf diesen Kurvenscheiben (12,13,14) abrollenden, dem Werkzeugträger (3) zugeordneten Rollkörpern (19) bestehen, wobei zwischen den Rollkörpern (19) und den Kurvenscheiben (12,13,14) mindestens drei Berührungspunkte vorliegen, und die Kurvenzüge (24,25,26) der Kurvenscheiben (12,13,14) eine dem halben Durchmesser der Rollkörper (19) entsprechende Äquidistante der in radialer Richtung um eine konstante Strecke ins Große verzerrten Kontur der Formbohrung bzw. Außenkontur beschreiben.

2. Formbohr- bzw. Formdrehgerät nach Anspruch 1, dadurch gekennzeichnet, daß der Kurvenzug (25) einer Kurvenscheibe (13) als eine der Schneide des Werkzeugs zugeordneten Hauptkurve (25) ausgebildet ist, während mindestens eine weitere Kurvenscheibe (12,14) eine entsprechend der Hauptkurve (25) festzulegende Komplementärkurve (24,26) aufweist.

3. Formbohr- bzw. Formdrehgerät nach Anspruch 1, dadurch gekennzeichnet, daß der Werkzeugträger (3) zur Aufnehme eines Fräsbohrers oder eines Werkzeugschaftes (20) ausgebildet ist, wobei an den Werkzeugschaft (20) eine auswechselbare Schneidplatte montierbar ist.

4. Formbohr- bzw. Formdrehgerät nach Anspruch 3, dadurch gekennzeichnet, daß die Schneidplatte radial verstellbar ist.

5. Formbohr- bzw. Formdrehgerät nach Anspruch 3, dadurch gekennzeichnet, daß der Fräsbohrer bzw. die auswechselbare Schneidplatte eine Schlichtschneide und mindestens eine gegenüber der Schlichtschneide radial zurückgesetzt und winkelmäßig verdreht angeordnete Schruppschneide besitzt.

6. Formbohr- bzw. Formdrehgerät nach Anspruch 1 oder 3, dadurch gekennzeichnet, daß der Werkzeugträger über einen Strömungsweg für ein flüssiges Kühlmittel verfügt, und dieser Strömungsweg mit einem maschinenseitigen Zufluß abdichtend verbindbar ist.

7. Fohrmbohr- bzw. Formdrehgerät nach Anspruch 1, dadurch gekennzeichnet, daß der Werkzeugträger (3) mit dem Antriebsschaft über eine spezielle Kupplung (z.B. Oldham-Kupplung, Kardangelenk, Schmidt-Kupplung, Metallspirale, Wellbalg oder dergleichen) verbunden ist, um eine rotative Kraftkomponente vom Antriebsschaft auf den Werkzeugträger (3) trotz der jeweiligen, in Radialebene liegenden Auslenkung des Werkzeugträgers (3) zu übertragen.

8. Fohrmbohr- bzw. Formdrehgerät nach Anspruch 7, dadurch gekennzeichnet, daß die spezielle Kupplung nach dem Oldham-Prinzip aus einer Scheibe (8) besteht, die zwei Gruppen von sich jeweils radial erstreckenden und diametral gegenüberliegenden Langlöchern aufweist, wobei die Gruppen im rechten Winkel zueinander versetzt angeordnet sind.

## Claims

1. Form drilling or turning device consisting of a drive shaft (1), a fixed housing (2) and a tool holder (3) which is constructed to accommodate a tool having at least one cutting edge, the drive shaft and tool holder being mounted rotatably in the housing and connected to one another in such a way that during operation a rotational force component is transmitted from the drive shaft onto the tool holder but the tool holder can simultaneously be deflected in the radial plane, this deflection being controllable for the purpose of contour production by means of control elements assigned to the housing and the tool holder, and the control elements consisting of at least two cam discs (12, 13, 14) which are firmly connected to the housing (2), arranged above one another and rotated with respect to one another by a specific angular amount in the direction of rotation, characterized in that the control elements furthermore consist of rolling members (19) which roll on these cam discs (12, 13, 14) and are assigned to the tool holder (3), there being at least three contact points present between the rolling members (19) and the cam discs (12, 13, 14), and the loci (24, 25, 26) of the cam discs (12, 13, 14) describing an equidistant line, corresponding to half the diameter of the rolling members (19), of the contour, enlarged by a constant distance in the radial direction, of the shaped bore or the external contour.

2. Form drilling or turning device according to Claim 1, characterised in that the locus (25) of a cam disc (13) is constructed as a lead cam (25) assigned to the cutting edge of the tool, while at least one further cam disc (12, 14) has a complementary cam (24, 26) that is to be established in accordance with the lead cam (25).

3. Form drilling or turning device according to Claim 1, characterised in that the tool holder (3) is constructed to accommodate a milling drill or a tool shank (20), an exchangeable cutting tip being mountable on the tool shank (20).

4. Form drilling or turning device according to Claim 3, characterised in that the cutting tip is radially adjustable.

5. Form drilling or turning device according to Claim 3, characterised in that the milling drill or the exchangeable cutting tip has a finishing cutting edge and at least one roughing cutting edge which is radially reduced and arranged with an angular twist with respect to the finishing cutting edge.

6. Form drilling or turning device according to Claim 1 or 3, characterised in that the tool holder has at its disposal a flow path for a liquid coolant, and this flow path can be sealingly connected to an inlet on the machine side.

7. Form drilling or turning device according to Claim 1, characterised in that the tool holder (3) is connected to the drive shaft via a special coupling (for example Oldham coupling, universal joint, Schmidt coupling, metal spiral, corrugated bellows or the like), in order despite the respective deflection, located in the radial plane, of the tool holder (3) to transmit a rotational force component from the drive shaft to the tool holder (3).

8. Form drilling or turning device according to Claim 7, characterised in that the special coupling according to the Oldham principle consists of a disc (8) which has two groups of longitudinal holes each of which extends radially and which are diametrically opposite one another, the groups being arranged offset at a right angle with respect to one another.

## Revendications

1. Outil de forme pour le perçage ou le tournage, composé d'un arbre moteur (1), d'un boîtier fixe (2) et d'un porte-outils (3) qui est prévu pour loger un outil ayant au moins une arête coupante, l'arbre moteur et le porte-outils étant montés et pouvant tourner dans le boîtier et étant en liaison l'un avec l'autre de façon que, pendant le fonctionnement, une composante rotative de force de l'arbre moteur soit transmise au porte-outils, mais le porte-outils pouvant en même temps être mobile dans un plan radial, cet écart pouvant être commandé Pour produire un contour au moyen du boîtier et d'éléments de commande associés au porte-outils, les éléments de commande consistant en au moins deux cames (12, 13, 14) reliées solidement au boîtier (2), superposées et décalées d'une valeur angulaire déterminée dans le sens de rotation, caractérisé en ce que les éléments de commande comprennent encore des galets (19) associés au porte-outils (3) et roulant sur ces cames (12, 13, 14), au moins trois points de contact existant entre les galets (19) et les cames (12, 13, 14), les courbes guides (24, 25, 26) des cames (12, 13, 14) décrivant le contour déformé en grandeur, dans une direction radiale d'environ une distance constante, du trou de formage ou du contour extérieur à distance constante équivalente au demi-diamètre du galet (19).

2. Outil de forme pour le perçage ou le tournage selon la revendication 1, caractérisé en ce que la courbe guide (25) d'une came (13) est prévue comme courbe maîtresse (25), en concordance avec une lame du porte-outils, pendant qu'au moins une came suivante (12, 14) présente une courbe complémentaire (24, 26), prévue de façon équivalente à la courbe maîtresse (25).

3. Outil de forme pour le perçage ou le tournage selon la revendication 1, caractérisé en ce que le porte-outils (3) est construit pour loger un outil de fraisage ou une tige d'outil (20), et où une matrice de découpage interchangeable est montée sur la tige d'outil (20).

4. Outil de forme pour le perçage ou le tournage selon la revendication 3, caractérisé en ce que la matrice de découpage est réglable radialement.

5. Outil de forme pour le perçage ou le tournage selon la revendication 3, caractérisé en ce que le foret de fraisage ou la matrice de découpage interchangeable possède une lame de finition et au moins une lame de dégrossissage radialement opposée à cette dernière et positionnée en décalage angulaire.

6. Outil de forme pour le perçage ou le tournage selon la revendication 1 ou 3, caractérisé en ce que le porte-outils dispose d'un trajet d'écoulement pour un fluide caloporteur et que ce trajet d'écoulement est connectable de façon étanche avec l'alimentation d'une machine.

7. Outil de forme pour le perçage ou le tournage selon la revendication 1, caractérisé en ce que le porte-outils (3) est relié à la tige motrice par un accouplement particulier (par exemple un accouplement d'Oldham, une articulation à cardan, un accouplement de Schmidt, une volute en métal, un soufflet ondulé, ou analogue) pour transférer une composante de force rotative de la tige motrice vers le porte-outils (3) malgré le décalage dans un plan radial du porte-outils (3).

8. Outil de forme pour le perçage ou le tournage selon la revendication 7, caractérisé en ce que l'accouplement spécifique selon le principe d'Oldham est constitué d'un disque (8) qui présente deux groupes de trous longitudinaux, radialement situés par rapport au disque et diamétralement opposés, et où les groupes sont disposés à angle droit.
